# EUROPÄISCHE PATENTSCHRIFT

(11) **EP 0 712 760 B1**
(45) Veröffentlichungstag und Bekanntmachung des Hinweises auf die Patenterteilung: **24.03.1999**
(21) Anmeldenummer: 95117683.3
(22) Anmeldetag: 09.11.1995
(51) Int. Cl.: B60R 21/16

(54) **Verfahren zum Falten eines Gassackes für ein Fahrzeuginsassen-Rückhaltesystem, Vorrichtung zu seiner Ausführung sowie gemäss dem Verfahren gefalteter Gassack**
Folding method of an air bag for a vehicle occupant restraint system, device for performing this method and air bag so obtained
Procédé de pliage d'un coussin d'air pour système de retenue pour occupants de véhicule, dispositif pour l'exécution de ce procédé et coussin d'air ainsi obtenu

(30) Priorität: 15.11.1994 DE 4440845
(43) Veröffentlichungstag der Anmeldung: 22.05.1996
(73) Patentinhaber: TRW Occupant Restraint Systems GmbH & Co. KG, 73551 Alfdorf (DE)
(72) Erfinder: Berti, Dietmar, D-73579 Schechingen (DE)
(74) Vertreter: Degwert, Hartmut, Dipl.-Phys.

(56) Entgegenhaltungen:
- PATENT ABSTRACTS OF JAPAN vol. 15 no. 61 (M-1081) ,13.Februar 1991 & JP-A-02 291363 (JIYAGAA) 3.Dezember 1990,
- PATENT ABSTRACTS OF JAPAN vol. 7 no. 133 (M-221) ,10.Juni 1983 & JP-A-58 049541 (NISSAN) 23.März 1983,
- PATENT ABSTRACTS OF JAPAN vol. 15 no. 404 (M-1168) ,15.Oktober 1991 & JP-A-03 167048 (MAZDA) 18.Juli 1991,

## Beschreibung

Die Erfindung betrifft ein Verfahren zum Falten eines Gassackes für ein Fahrzeuginsassen-Rückhaltesystem, der im aufgeblasenen Zustand eine dreidimensionale Form aufweist und aus einem entleerten, abgeflachten und ausgebreiteten Zustand, in welchem seine Wandung aus einem mit einer Einlaßöffnung versehenen Befestigungsabschnitt, einem diesem gegenüberliegenden Abschnitt und einem Übergangsabschnitt zwischen diesen Wandungsabschnitten besteht, in eine an den Innenraum einer für ihn vorgesehenen Aufnahme angepaßte Form gefaltet wird.

Die Erfindung betrifft auch eine Vorrichtung zum Ausführen dieses Verfahrens sowie einen unter Verwendung dieses Verfahrens gefalteten Gassack.

Im Stand der Technik wird der Gassack für ein Fahrzeuginsassen-Rückhaltesystem im allgemeinen manuell gefaltet. Dies geschieht im wesentlichen wie folgt: Der Gassack wird mit einer seine Einlaßöffnung umgebenden Befestigungsplatte an einer entsprechenden Vorrichtung befestigt und in einem entleerten, abgeflachten Zustand auf einer Faltfläche ausgebreitet. Dann werden nacheinander einzeln klappbar an dieser Vorrichtung angebrachte Faltschwerter auf den ausgebreiteten Gassack heruntergeklappt, und der Gassack wird jeweils um eine von diesen Faltschwertern gebildete Faltkante gefaltet. Durch das aufeinanderfolgende Herunterklappen der entsprechenden Faltschwerter und das entsprechende Falten des Gassacks wird der Gassack aus seiner ursprünglichen, ausgebreiteten Form in eine gefaltete Form gebracht, in der er in dem Innenraum einer Aufnahme angebracht werden kann. Nach Beendigung des Faltens werden die Faltschwerter aus dem gefalteten Gassack herausgezogen.

So ist z.B. aus der JP-A 58 049541 ein Verfahren zum Falten eines Gassacks bekannt, bei dem die Wandung des ausgebreiteten Gassacks in verschiedenen Quadranten in genau festgelegter Reihenfolge gefaltet wird. Außerdem ist angegeben, daß der Gassack gleichmäßig um eine Aufblasvorrichtung herum gewickelt werden kann. Aus der JP-A-022 91363 ist eine Vorrichtung zum Falten eines Gassacks bekannt, bei der zum Falten des Gassacks verschiedene Faltplatten zusammen mit Halteteilen verwendet werden, wobei ein Teil der verwendeten Halteelemente auf einer bogenförmigen Bahn verschwenkt wird.

Diese Verfahren nach dem Stand der Technik, die sowohl für fahrerseitige als auch für beifahrerseitige Gassäcke verwendet werden können, weisen einige Nachteile auf. Zuerst ist das Falten eine ergonomisch schwierige Tätigkeit. Des weiteren ist mit der Verwendung der Faltschwerter die Gefahr verbunden, daß im Falle einer scharfkantigen Oberfläche der Faltschwerter der Gassack beim Falten beschädigt wird. Schließlich ist ein solches Falten, das ungefähr 20 Faltschritte erfordert, eine zeitaufwendige Operation. Bekannte Faltverfahren erfordern je nach Größe und Anbringungsart des Gassackes Faltzeiten zwischen 2 und 4 Minuten.

Neuerdings werden auch automatische Faltvorrichtungen verwendet, die mit komplizierten dreidimensionalen Faltbewegungen arbeiten, so daß Faltschwerter entfallen. Ungewollte Gewebefalten, die bei einem manuellen Falten von Hand beseitigt werden, werden beim automatischen Falten durch ein Wechselspiel von Druckluft und Vakuum beseitigt. Diese automatischen Faltverfahren können die notwendige Faltzeit allerdings nur geringfügig vermindern; ferner sind aufgrund des komplizierten Bewegungsablaufes beim Falten die Vorrichtungen sehr aufwendig.

Aufgabe der Erfindung ist es, die zum Falten eines Gassackes notwendige Bearbeitungszeit wesentlich zu vermindern.

Die Aufgabe der Erfindung wird bei einem Verfahren der eingangs angegebenen Art dadurch gelöst, daß die Faltung des Gassackes im wesentlichen durch eine Relativverdrehung zwischen dem Befestigungsabschnitt und dem diesem gegenüberliegenden Abschnitt erfolgt, wobei die Achse der Verdrehung im wesentlichen senkrecht zur Ebene des ausgebreiteten Gassackes ist.

Durch die Verwendung einer Drehbewegung anstatt einer Vielzahl von nacheinander erfolgenden Faltungen um je eine gerade Faltlinie kann die gesamte Faltung im wesentlichen mit einem einzigen Arbeitsschritt ausgeführt werden, was die notwendige Bearbeitungszeit wesentlich vermindert.

In der bevorzugten Ausführungsform wird zusätzlich der Übergangsabschnitt relativ zu dem Befestigungsabschnitt bewegt.

Zweckmäßigerweise ist vorgesehen, daß der Übergangsabschnitt relativ zu dem Befestigungsabschnitt durch ein Einwirken auf in dem Übergangsabschnitt voneinander beabstandet angeordnete Spannstellen bewegt wird, wobei der Befestigungsabschnitt drehfest gehalten wird. Vorzugsweise werden acht entlang dem Übergangsabschnitt gleichmäßig voneinander beabstandete Spannstellen verwendet.

Vorzugsweise werden die Spannstellen bei der Verdrehung auf einer im wesentlichen spiralförmigen Bahn an die Einlaßöffnung heranbewegt.

Zweckmäßigerweise wird der gefaltete Gassack in einer Aufnahme abgelegt, so daß er sich nicht wieder entfalten kann.

Eine erfindungsgemäße Vorrichtung zum Ausführen des Verfahrens ist dadurch gekennzeichnet, daß Spannvorrichtungen und eine Haltevorrichtung für den Befestigungsabschnitt vorgesehen sind und die Spannvorrichtungen und die Haltevorrichtung eine solche Wirkung auf den Gassack ausüben können, daß mindestens zwei Wandungsabschnitte relativ zueinander verdreht werden, wobei die Spannvorrichtungen eine Spannbaugruppe bilden, die vorzugsweise um eine zu der Ebene des ausgebreiteten Gassackes im wesentlichen senkrechte Achse relativ zu der Haltevorrichtung drehbar ist.

Zweckmäßigerweise hält die Haltevorrichtung den Befestigungsabschnitt bei der Verdrehung drehfest.

Vorzugsweise greifen die Spannvorrichtungen an dem Übergangsabschnitt an. Zweckmäßigerweise ist vorgesehen, daß die Spannvorrichtungen entlang dem Übergangsabschnitt angeordnet sind; vorzugsweise sind sie im wesentlichen kreisförmig angeordnet.

Gemäß der bevorzugten Ausführungsform der Erfindung sind acht gleichmäßig voneinander beabstandete Spannvorrichtungen angeordnet.

In der bevorzugten Ausführungsform der Erfindung sind die Spannvorrichtungen so angebracht, daß sie zu der Einlaßöffnung und von dieser weg bewegbar sind; vorzugsweise sind die Spannvorrichtungen mit Verstellmitteln versehen, welche die Spannvorrichtungen gesteuert in Richtung der Einlaßöffnung bewegen, wenn die mindestens zwei Wandungsabschnitte relativ zueinander verdreht werden.

Ein erfindungsgemäßer Gassack ist dadurch gekennzeichnet, daß gegenüber dem ausgebreiteten Zustand mindestens der Befestigungsabschnitt relativ zu dem diesem gegenüberliegenden Abschnitt verdreht ist.

Gemäß der bevorzugten Ausführungsform der Erfindung erstrecken sich Falten von dem Übergangsabschnitt aus. Diese Falten sind vorzugsweise allgemein bogenförmig.

Gemäß der bevorzugten Ausführungsform der Erfindung ist weiterhin der wesentliche Teil der Wandung allgemein wulstförmig um die Einlaßöffnung herum angeordnet.

Die Vorteile und Merkmale der Erfindung ergeben sich insbesondere aus der nachfolgenden Beschreibung, die sich auf die beigefügte Zeichnung bezieht. In dieser zeigen:
- Fig. 1 schematisch in einer Draufsicht einen Gassack vor dem Falten sowie Spannvorrichtungen der Vorrichtung zum Falten ; und
- Fig. 2 schematisch den Gassack von Fig. 1 nach dem Falten.

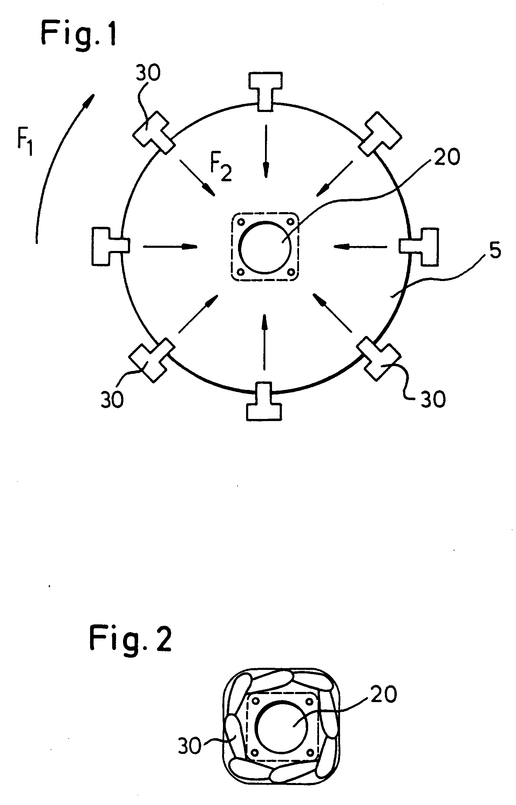

In Fig. 1 ist ein allgemein bekannter Gassack 5 dargestellt, der eine Einlaßöffnung 20 aufweist. Die Wandung des Gassackes 5 besteht aus einem Befestigungsabschnitt auf der Seite seiner Einlaßöffnung 20, einem diesem Wandungsabschnitt gegenüberliegenden Abschnitt sowie aus einem Übergangsabschnitt zwischen diesen Wandungsabschnitten.

Der Gassack 5 ist in Fig. 1 in seinem entleerten, abgeflachten Zustand dargestellt, in dem er ausgebreitet auf einer (nicht dargestellten) Faltfläche einer nur schematisch angedeuteten Vorrichtung zum Falten angeordnet ist.

Diese Vorrichtung weist abgesehen von der Faltfläche im wesentlichen eine Haltevorrichtung auf, welche den Befestigungsabschnitt des Gassackes 5 drehfest halten kann, sowie eine Spannbaugruppe, die im wesentlichen aus Spannvorrichtungen 30 besteht, die dafür ausgelegt sind, den Gassack an seinem Übergangsabschnitt an Orten zu ergreifen, die Spannstellen genannt werden.

Die Spannvorrichtungen 30 können bekannte Greifelemente sein, die an der Spannbaugruppe derart bewegbar angebracht sind, daß sie sich in Richtung der Einlaßöffnung 20 des Gassackes 5 und von dieser weg bewegen können. Dabei können die Spannvorrichtungen 30 so angebracht sein, daß sie passiv von einer von dem Gassack 5 über die Spannstellen auf die Spannvorrichtungen 30 ausgeübten Zugwirkung bewegbar sind oder aktiv von Verstellelementen. In der dargestellten Ausführungsform weist die Spannbaugruppe acht voneinander beabstandet angebrachte Spannvorrichtungen 30 auf, die entlang dem Umfang des zu faltenden Gassackes 5 angeordnet sind. Bei einem zu faltenden runden Gassack 5, wie er in Fig. 1 dargestellt ist, sind die Spannvorrichtungen 30 also kreisförmig angeordnet.

Das erfindungsgemäße Verfahren zum Falten eines Gassackes läuft wie folgt ab: Der Gassack 5 wird auf der Faltfläche angeordnet, und die Haltevorrichtung legt seinen Befestigungsabschnitt fest. Die Spannvorrichtungen 30 ergreifen den Gassack an den Spannstellen. Danach wird die Spannbaugruppe relativ zu der Haltevorrichtung verdreht, beispielsweise in Richtung des Pfeils F₁ von Fig. 1. Durch diese Drehbewegung verringert sich der Außendurchmesser des Gassackes 5, weshalb die den Gassack haltenden Spannvorrichtungen 30 radial nach innen in Richtung des Pfeils F₂ von Fig. 1 nachgeführt werden müssen. Diese Nachführung kann passiv oder aktiv geschehen.

Man sieht, daß durch die Überlagerung der Drehbewegung der Spannstellen entlang dem Pfeil F₁ relativ zu der Einlaßöffnung 20 mit der Translationsbewegung entlang den Pfeil F₂ sich die Spannstellen des Gassackes 5 und somit auch die Spannvorrichtungen 30 auf einer spiralförmigen Bahn auf die Einlaßöffnung 20 zubewegen. Dabei wird die Wandung des Gassackes 5 offensichtlich in einer wickelartigen Bewegung um die Einlaßöffnung 20 herum angeordnet. Diese Drehbewegung kann fortgesetzt werden, bis der Gassack 5 die in Fig. 2 dargestellte Form aufweist. Man sieht, daß in diesem gefalteten Zustand des Gassackes 5 die gesamte Wandung des Gassackes 5 allgemein wulstförmig um die Einlaßöffnung 20 herum angeordnet ist, wobei die Spannstellen an der Außenfläche des gefalteten Gassackes zu liegen kommen.

Diese Drehbewegung kann so lange weitergeführt werden, bis die gewünschte Packungsdichte der Faltung erreicht ist. Eine Grenze für die Packungsdichte ist im wesentlichen nur von einem möglichen Geweberiß bestimmt.

Das erfindungsgemäße Verfahren kann in der gleichen Weise auch für Gassäcke verwendet werden, die in dem ausgebreiteten Zustand eine Gestalt aufweisen, die von der kreisförmigen Gestalt abweicht, wie es z.B. bei einem Beifahrer-Gassack der Fall ist. Der einzige Unterschied zu dem oben dargestellten Vorgehen besteht darin, daß, da die Anordnung der Spannvorrichtungen 30 im wesentlichen an die Gestalt des ausgebreiteten Gassackes angepaßt ist, in diesem Fall die Spannvorrichtungen 30 nicht kreisförmig angeordnet sind.

Nach Beendigung des Faltens kann der gefaltete Gassack 5 in einer Aufnahme abgelegt werden, so daß er nicht zusätzlich gegen Entfalten gesichert werden muß.

Das erfindungsgemäße Verfahren weist insbesondere den Vorteil auf, daß die zum Ausführen der Faltung eines Gassackes 5 notwendige Bearbeitungszeit auf eine Zeitdauer in der Größenordnung von fünf Sekunden vermindert wird.

Ein durch das erfindungsgemäße Verfahren gefalteter Gassack 5 weist den Vorteil auf, daß im Gegensatz zu einem nach dem Stand der Technik gefalteten Gassack, bei dem sich ein wesentlicher Teil der Wandung vor der Einlaßöffnung befindet und somit bei Füllen des Gassackes von dem Gasdruck im Inneren des Gassackes von der Einlaßöffnung wegbewegt werden muß, bei dem erfindungsgemäßen Gassack der wesentliche Teil der Wandung um die Einlaßöffnung 20 herum angeordnet ist, so daß der zum Entfalten des Gassackes 5 in diesen einströmende Gasstrom nicht zuerst durch den Großteil der vor der Einlaßöffnung 20 liegenden Wandung gebremst wird.

Im Gegensatz zu einem nach dem Stand der Technik gefalteten Gassack, der sich beim Füllen gemäß der beim Falten durchgeführten vielen Faltschritte entfalten muß, entfaltet sich ein erfindungsgemäßer Gassack 5 dadurch, daß die beim Falten erfolgte Verdrehung von Wandungsabschnitten durch eine Drehung in entgegengesetzter Richtung aufgelöst wird. Dies ermöglicht ein leichteres Entfalten des Gassackes 5.

Die erfindungsgemäße Vorrichtung weist schließlich den Vorteil auf, daß die von ihr auszuführende Bewegung, die im wesentlichen nur eine Drehbewegung ist, sehr viel leichter auszuführen ist als die komplizierten Faltbewegungen der Vorrichtungen nach dem Stand der Technik.

## Patentansprüche

1. Verfahren zum Falten eines Gassackes (5) für ein Fahrzeuginsassen-Rückhaltesystem, der im aufgeblasenen Zustand eine dreidimensionale Form aufweist und aus einem entleerten, abgeflachten und ausgebreiteten Zustand, in welchem seine Wandung aus einem mit einer Einlaßöffnung (20) versehenen Befestigungsabschnitt, einem diesem gegenüberliegenden Abschnitt und einem Übergangsabschnitt zwischen diesen Wandungsabschnitten besteht, in eine an den Innenraum einer für ihn vorgesehenen Aufnahme angepaßte Form gefaltet wird, dadurch gekennzeichnet, daß die Faltung des Gassackes im wesentlichen durch eine Relativverdrehung zwischen dem Befestigungsabschnitt und dem diesem gegenüberliegenden Abschnitt erfolgt, wobei die Achse der Verdrehung im wesentlichen senkrecht zur Ebene des ausgebreiteten Gassackes (5) ist.

2. Verfahren nach Anspruch 1, dadurch gekennzeichnet, daß zusätzlich der Übergangsabschnitt relativ zu dem Befestigungsabschnitt bewegt wird.

3. Verfahren nach Anspruch 2, dadurch gekennzeichnet, daß der Übergangsabschnitt relativ zu dem Befestigungsabschnitt durch ein Einwirken auf in dem Übergangsabschnitt voneinander beabstandet angeordnete Spannstellen bewegt wird, wobei der Befestigungsabschnitt drehfest gehalten wird.

4. Verfahren nach Anspruch 3, dadurch gekennzeichnet, daß acht entlang dem Übergangsabschnitt gleichmäßig voneinander beabstandete Spannstellen verwendet werden.

5. Verfahren nach einem der Ansprüche 3 und 4, dadurch gekennzeichnet, daß die Spannstellen bei der Verdrehung auf einer im wesentlichen spiralförmigen Bahn an die Einlaßöffnung (20) heranbewegt werden.

6. Verfahren nach einem der vorhergehenden Ansprüche, dadurch gekennzeichnet, daß der gefaltete Gassack (5) in einer Aufnahme abgelegt wird, so daß er sich nicht wieder entfalten kann.

7. Vorrichtung zum Falten eines Gassackes (5) für ein Fahrzeuginsassen-Rückhaltesystem, der im aufgeblasenen Zustand eine dreidimensionale Form aufweist und aus einem entleerten, abgeflachten und ausgebreiteten Zustand, in dem seine Wandung aus einem mit einer Einlaßöffnung (20) versehenen Befestigungsabschnitt, einem diesem gegenüberliegenden Abschnitt und einem Übergangsabschnitt zwischen diesen Wandungsabschnitten besteht, in eine an den Innenraum einer Aufnahme angepaßte Form gefaltet wird, dadurch gekennzeichnet, daß Spannvorrichtungen (30) und eine Haltevorrichtung für den Befestigungsabschnitt vorgesehen sind und die Spannvorrichtungen (30) und die Haltevorrichtung eine solche Wirkung auf den Gassack (5) ausüben können, daß mindestens zwei Wandungsabschnitte relativ zueinander verdreht werden, wobei die Spannvorrichtungen (30) eine Spannbaugruppe bilden, die um eine zu der Ebene des ausgebreiteten Gassackes (5) im wesentlichen senkrechte Achse relativ zu der Haltevorrichtung drehbar ist.

8. Vorrichtung nach Anspruch 7, dadurch gekennzeichnet, daß die Haltevorrichtung den Befestigungsabschnitt bei der Verdrehung drehfest hält.

9. Vorrichtung nach einem der Ansprüche 7 und 8, dadurch gekennzeichnet, daß die Spannvorrichtungen (30) an dem Übergangsabschnitt angreifen.

10. Vorrichtung nach Anspruch 9, dadurch gekennzeichnet, daß die Spannvorrichtungen (30) entlang dem Übergangsabschnitt angeordnet sind.

11. Vorrichtung nach Anspruch 10, dadurch gekennzeichnet, daß die Spannvorrichtungen (30) im wesentlichen kreisförmig angeordnet sind.

12. Vorrichtung nach einem der Ansprüche 7 bis 11, dadurch gekennzeichnet, daß die Spannvorrichtungen (30) voneinander beabstandet angeordnet sind.

13. Vorrichtung nach Anspruch 12, dadurch gekennzeichnet, daß acht gleichmäßig voneinander beabstandete Spannvorrichtungen (30) angeordnet sind.

14. Vorrichtung nach einem der Ansprüche 7 bis 13, dadurch gekennzeichnet, daß die Spannvorrichtungen (30) so angebracht sind, daß sie zu der Einlaßöffnung (20) oder von dieser weg bewegbar sind.

15. Vorrichtung nach Anspruch 14, dadurch gekennzeichnet, daß die Spannvorrichtungen (30) mit Verstellmitteln versehen ist, welche die Spannvorrichtungen (30) gesteuert in Richtung der Einlaßöffnung (20) bewegen, wenn die mindestens zwei Wandungsabschnitte relativ zueinander verdreht werden.

16. Gefalteter Gassack für ein Fahrzeuginsassen-Rückhaltesystem, der im aufgeblasenen Zustand eine dreidimensionale Form aufweist und aus einem entleerten, abgeflachten und ausgebreiteten Zustand, in dem seine Wandung aus einem mit einer Einlaßöffnung (20) versehenen Befestigungsabschnitt, einem diesem gegenüberliegenden Abschnitt und einem Übergangsabschnitt zwischen diesen Wandungsabschnitten besteht, in eine an den Innenraum einer Aufnahme angepaßte Form gefaltet ist, dadurch gekennzeichnet, daß ausgehend von dem ausgebreiteten Zustand mindestens der Befestigungsabschnitt relativ zu dem diesem gegenüberliegenden Abschnitt verdreht ist, wobei die Achse der Verdrehung im wesentlichen senkrecht zur Ebene des ausgebreiteten Gassackes ist.

17. Gefalteter Gassack nach Anspruch 16, dadurch gekennzeichnet, daß sich Falten von dem Übergangsabschnitt aus einwärts erstrecken.

18. Gefalteter Gassack nach Anspruch 17, dadurch gekennzeichnet, daß die Falten allgemein bogenförmig sind.

19. Gefalteter Gassack nach einem der Ansprüche 16 bis 18, dadurch gekennzeichnet, daß der wesentliche Teil der Wandung allgemein wulstförmig um die Einlaßöffnung (20) herum angeordnet ist.

## Claims

1. A method of folding a gas bag (5) for a vehicle occupant restraint system, the gas bag being three-dimensional in shape in the inflated condition and being folded from a deflated, flattened and spread-out condition in which the wall thereof comprises a fastening section provided with an inflation port (20), a section opposite thereto and a junction section between these wall sections, into a shape adapted to the interior space of a receiving compartment provided for the gas bag, characterized in that folding the gas bag is done substantially by turning the fastening section and the section opposite thereto relative to each other, the axis of turning being substantially perpendicular to the plane of the spread-out gas bag (5).

2. The method according to claim 1, characterized in that the junction section is in addition moved relative to the fastening section.

3. The method according to claim 2, characterized in that the junction section is moved relative to the fastening section by acting on clamping locations disposed spaced away from each other in the junction section, the fastening section being held to resist rotation.

4. The method according to claim 3, characterized in that eight clamping locations are employed equispaced along the junction section.

5. The method according to either one of claims 3 and 4, characterized in that the clamping locations are made to approach the inflation port (20) during turning on a path substantially spiral in shape.

6. The method according to any one of the preceding claims, characterized in that the folded gas bag (5) is deposited in a receiving compartment so that it is prevented from unfolding again.

7. A device for folding a gas bag (5) for a vehicle occupant restraint system, the gas bag being three-dimensional in shape in the inflated condition and being folded from a deflated, flattened and spread-out condition in which the wall thereof comprises a fastening section provided with an inflation port (20), a section opposite thereto and a junction section between these wall sections, into a shape adapted to the interior space of a receiving compartment, characterized in that clamping means (30) and a holding means are provided for the fastening section and that the clamping means (30) and holding means are able to exert such an influence on the gas bag (5) that at least two wall sections are turned relative to each other, the clamping means (30) forming a clamping assembly which is rotatable relative to the holding means about an axis substantially perpendicular to the plane of the spread-out gas bag (5).

8. The device according to claim 7, characterized in that the holding means holds the fastening section during turning so as to prevent rotation.

9. The device according to either one of claims 7 and 8, characterized in that the clamping means (30) engage the junction section.

10. The device according to claim 9, characterized in that the clamping means (30) are disposed along the junction section.

11. The device according to claim 10, characterized in that the clamping means (30) are arranged substantially circularly.

12. The device according to any one of claims 7 to 11, characterized in that the clamping means (30) are arranged spaced away from each other.

13. The device according to claim 12, characterized in that eight clamping means (30) are arranged equispaced.

14. The device according to any one of claims 7 to 13, characterized in that the clamping means (30) are disposed in such a manner that they are movable towards or away from the inflation port (20).

15. The device according to claim 14, characterized in that the clamping means (30) are provided with adjusting means which provide controlled movement of the clamping means (30) in the direction of the inflation port (20), when the at least two wall sections are turned relative to each other.

16. A folded gas bag for a vehicle occupant restraint system, the gas bag being three-dimensional in shape in the inflated condition and being folded from a deflated, flattened and spread-out condition in which the wall thereof comprises a fastening section provided with an inflation port (20), a section opposite thereto and a junction section between these wall sections, into a shape adapted to the interior space of a receiving compartment, characterized in that starting from the spread-out condition at least the fastening section is turned relative to the section opposite thereto, the axis of turning being substantially perpendicular to the plane of the spread-out gas bag.

17. The folded gas bag according to claim 16, characterized in that folds extend from the junction section inwards.

18. The folded gas bag according to claim 17, characterized in that the folds have a generally curved shape.

19. The folded gas bag according to any one of claims 16 to 18, characterized in that the substantial part of the wall is disposed generally bead-shaped around the inflation port (20).

## Revendications

1. Procédé servant à plier un coussin d'air (5) pour un système de retenue de passagers d'un véhicule, qui présente, quand il est en position gonflée, une forme en trois dimensions et qui, à partir d'une position vidée, aplatie et déployée, dans laquelle sa paroi consiste en une section de fixation, pourvue d'un orifice d'entrée (20), en une section située en regard de celle-ci et en une section de transition entre ces sections de paroi, est plié dans une forme adaptée au volume intérieur d'un réceptacle prévu pour lui, procédé caractérisé en ce que le pliage du coussin d'air a lieu essentiellement grâce à une rotation relative entre la section de fixation et la section située en regard de celle-ci, l'axe de rotation étant sensiblement perpendiculaire au plan du coussin d'air déployé (5).

2. Procédé selon la revendication 1, caractérisé en ce qu'en plus la section de transition se déplace par rapport à la section de fixation.

3. Procédé selon la revendication 2, caractérisé en ce que la section de transition se déplace par rapport à la section de fixation par une action sur des points de serrage disposés dans la section de transition à une certaine distance les uns des autres, la section de fixation étant maintenue de manière à ne pas pouvoir tourner.

4. Procédé selon la revendication 3, caractérisé en ce que l'on utilise huit points de serrage situés régulièrement à distance les uns des autres le long de la section de transition.

5. Procédé selon l'une des revendications 3 et 4, caractérisé en ce que l'on approche les points de serrage de l'orifice d'entrée (20), lors de la rotation, sur une piste ayant sensiblement la forme d'une spirale.

6. Procédé selon l'une des revendications précédentes, caractérisé en ce que le coussin d'air replié (5) est déposé dans un réceptacle d'une manière telle qu'il ne puisse pas à nouveau se déplier.

7. Dispositif servant à plier un coussin d'air (5) pour un système de retenue de passagers d'un véhicule, qui présente, quand il est en position gonflée, une forme en trois dimensions et qui, à partir d'une position vidée, aplatie et déployée, dans laquelle sa paroi consiste en une section de fixation, pourvue d'un orifice d'entrée (20), en une section située en regard de celle-ci et en une section de transition entre ces sections de paroi, est plié dans une forme adaptée au volume intérieur d'un réceptacle, caractérisé en ce qu'il est prévu des dispositifs de serrage (30) et un dispositif de maintien pour la section de fixation et en ce que les dispositifs de serrage (30) et le dispositif de maintien peuvent exercer sur le coussin d'air (5) une action telle qu'au moins deux sections de paroi tournent l'une par rapport à l'autre, les sections de serrage (30) formant un groupe de serrage, qui peut tourner par rapport au dispositif de maintien autour d'un axe sensiblement perpendiculaire au plan du coussin d'air déployé (5).

8. Dispositif selon la revendication 7, caractérisé en ce que le dispositif de maintien empêche la section de fixation de tourner lors de la rotation.

9. Dispositif selon l'une des revendications 7 et 8, caractérisé en ce que les dispositifs de serrage (30) viennent en contact avec la section de transition.

10. Dispositif selon la revendication 9, caractérisé en ce que les dispositifs de serrage (30) sont disposés le long de la section de transition.

11. Dispositif selon la revendication 10, caractérisé en ce que les dispositifs de serrage (30) sont disposés sensiblement en forme de cercle.

12. Dispositif selon l'une des revendications 7 à 11, caractérisé en ce que les dispositifs de serrage (30) sont disposés à distance les uns des autres.

13. Dispositif selon la revendication 12, caractérisé en ce que l'on dispose huit dispositifs de serrage (30), répartis régulièrement à distance les uns des autres.

14. Dispositif selon l'une des revendications 7 à 13, caractérisé en ce que les dispositifs de serrage (30) sont placés de telle sorte qu'on puisse les rapprocher ou les écarter de l'orifice d'entrée (20).

15. Dispositif selon la revendication 14, caractérisé en ce que les dispositifs de serrage (30) sont pourvus de moyens de réglage, qui déplacent les dispositifs de serrage (30) en les commandant dans la direction de l'orifice d'entrée (20), quand on fait tourner au moins les deux sections de paroi l'une par rapport à l'autre.

16. Coussin d'air replié pour un système de retenue de passagers d'un véhicule, qui présente, quand il est en position gonflée, une forme en trois dimensions et qui, à partir d'une position vidée, aplatie et déployée, dans laquelle sa paroi consiste en une section de fixation, pourvue d'un orifice d'entrée (20), en une section située en regard de celle-ci et en une section de transition entre ces sections de paroi, est plié dans une forme adaptée au volume intérieur d'un réceptacle, caractérisé en ce que l'on fait tourner en partant de sa position déployée au moins la section de fixation par rapport à la section située en regard de celle-ci, l'axe de rotation étant sensiblement perpendiculaire au plan du coussin d'air déployé.

17. Coussin d'air replié selon la revendication 16, caractérisé en ce que des plis s'étendent vers l'intérieur à partir de la section de transition.

18. Coussin d'air replié selon la revendication 17, caractérisé en ce que les plis ont de façon générale la forme d'arcs.

19. Coussin d'air replié selon l'une des revendications 16 à 18, caractérisé en ce que la partie essentielle de la paroi est disposée, de façon générale, en forme de bourrelet autour de l'orifice d'entrée (20).
